# EUROPEAN PATENT SPECIFICATION

(11) **EP 3 402 339 B1**
(45) Date of publication and mention of the grant of the patent: **10.03.2021**
(21) Application number: 17739026.7
(22) Date of filing: 13.01.2017
(51) Int. Cl.: A23G 3/36, A23L 27/40, A23L 29/30, A23L 33/20, A23G 3/00, A23G 4/00, A23G 1/32, A23G 1/40, A23G 3/42, A23G 4/06, A23G 4/10

(54) **REDUCED SALT MIXTURES FOR CONFECTIONS**
REDUZIERTE SALZGEMISCHE FÜR SÜSSWAREN
MÉLANGES POUR CONFISERIES À TENEUR EN SEL RÉDUITE

(30) Priority: 13.01.2016 US 201662278406 P
(43) Date of publication of application: 21.11.2018
(73) Proprietor: Wm. Wrigley Jr. Company, Chicago, IL 60642 (US)
(72) Inventor: RAMIREZ, Lilian, Chicago Illinois 60642 (US); TRAN, Lisa, Chicago Illinois 60642 (US)
(74) Representative: Haseltine Lake Kempner LLP
(86) International application number: PCT/US2017/013397
(87) International publication number: WO 2017/123916

(56) References cited:
- EP-A1- 0 130 822
- WO-A1-02/13631
- WO-A1-03/068006
- WO-A1-2015/015151
- FR-A1- 2 996 729
- US-A1- 2008 003 339
- US-A1- 2008 050 407
- US-A1- 2012 045 550
- US-A1- 2012 244 263
- US-A1- 2013 295 180
- US-A1- 2014 255 589
- US-A1- 2015 342 231

## Description

### CROSS-REFERENCE TO RELATED APPLICATION

This application claims priority to pending U.S. Provisional Application Serial No. 62/278,406, filed January 13, 2. 2016.

### BACKGROUND

This invention relates to a reduced salt mixture and improved confectionary compositions using a reduced salt mixtures comprising a salt substitute, having at least two different particle sizes which give an acceptable texture, stability, clarity and flavor delivery, while having less sodium chloride than traditional salted confectionary compositions. The salted confectionary compositions having a reduced salt mixture containing different particle sizes of a salt substitute, provides a reduction of the sodium content by at least 50% by weight of a salted confectionary composition.

In recent years, government agencies, health professionals, and retailers have sought to reduce salt in food products, which has led to an increase in the development of salt replacing ingredients to reduce the quantity of salt consumed by the public.

Usage of salt, also referred to as sodium chloride (NaCl) is well known. While salt imparts desirable taste and flavor, a fuller and thicker texture, and reduces bitterness, etc., to various foods and confectionary products, too much use can result in long term health risks. Because of the proliferation of salt in prepared foods and other products found in grocery stores, many people exceed the average recommended daily intake. Exceeding the recommended daily intake of sodium presents a significant risk factor in developing high blood pressure, and can become a contributing factor in the rising incidence of heart disease.

Initiatives directed around replacing salt have been focused on using other ingredients, namely other mineral salts such as potassium chloride, flavor enhancers and yeast extracts with strong umami characteristics. While there are a variety of salt substitutes in the market, the taste of salt substitute mixtures without sodium chloride is unsatisfactory, so that most mixtures contain a portion of sodium chloride. Often, these replacements to salt contribute negative organoleptic properties

EP0 130 822 A1 discloses a salt substitute blend composition comprising a uniform admixture comprising a) potassium chloride, and b) maltodextrin, wherein the dextrose equivalent of the admixture is not more than 10 D.E. units.

There is a growing demand in the confectionary industry to provide consumers savory and/or spicy flavors, or those that appeal to certain ethnicities. Various confectionary compositions use salt as a means to enhance flavor and color, and create new organoleptic experiences to consumers. The problem in offering these types of these salted confectionary compositions to consumers is that these confectionary compositions generally provide high levels of salt to achieve the appropriate level of perceived taste or a unique sensory experience to consumers.

The present inventors have found new solutions in providing ingredients that are comparable in appearance and taste to salted confections containing sodium chloride, which do not have an off flavor, and function like sodium chloride in salted confectionary products. The inventors have surprisingly found that in using a salt substitute, wherein at least two different particle size ranges are applied, the sodium content is reduced by at least 50% by weight, and more preferably 85% by weight of salted confectionary composition while still maintaining a similar taste and appearance to those products containing salt.

The presently disclosed subject matter addresses this need as discussed in detail below.

### SUMMARY OF THE INVENTION

Salted confectionary compositions containing at least one a salt substitute, a modified salt, or a modified salt substitute individually, or in combination having at least two different particle sizes to reduce the amount of salt delivered to consumer without compromising taste. In one embodiment, this unique combination of particle sizes and ingredients provides a salt reduction of at least 50% by weight of a salted confectionary composition.

### DETAILED DESCRIPTION

As noted above, there remains a need in the art for confections having a reduction in salt that tastes sufficiently the same as having a non-reduced amount of salt without imparting negative organoleptic attributes as perceived by a consumer.

The present invention relates to improved confections, more specifically, the invention relates to improved confections using reduced salt mixture comprising at least two or more different particle sizes of a salt substitute, wherein the at least two or more different particle sizes comprise fine and coarse particles, which give an acceptable texture, stability, clarity and flavor delivery, while having less sodium than traditional confectionary compositions.

### 1. Definitions

The terms used in this specification generally have their ordinary meanings in the art, within the context of this disclosed subject matter and in the specific context where each term is used. Certain terms are discussed below, or elsewhere in the specification, to provide additional guidance to the practitioner in describing the compositions and methods of the disclosed subject matter and how to make and use them.

As used herein, the use of the word "a" or "an" when used in conjunction with the term "comprising" in the claims and/or the specification may mean "one," but it is also consistent with the meaning of "one or more," "at least one," and "one or more than one." Still further, the terms "having," "including," "containing" and "comprising" are interchangeable and one of skill in the art is cognizant that these terms are open ended terms.

The term "about" or "approximately" means within an acceptable error range for the particular value as determined by one of ordinary skill in the art, which will depend in part on how the value is measured or determined, i.e., the limitations of the measurement system. For example, "about" can mean within 3 or more than 3 standard deviations, per the practice in the art. Alternatively, "about" can mean a range of up to 20%, preferably up to 10%, more preferably up to 5%, and more preferably still up to 1% of a given value.

As used herein, the term "confection" refers to a flavored substance intended for consumption. Confections include but are not limited to sugar and sugar-free chewy, hard or gelled candies, toffees, chewing gums, syrups, films, and chocolates.

As used herein, "salt," means sodium chloride (NaCl).

As used herein, "regular" means unmodified. For example, "regular" salt or NaCl means unmodified NaCl, or NaCl that has not been additionally processed by heating and/or aerosolizing. Regular salt is a solid cube-shaped particle.

Modified salt means salt (NaCl) that has a modified physical structure. Modified salt has a physical structure that is different from regular salt.

As used herein, "salt substitute" which consists of mineral salts other than NaCl, can impart a salty taste/flavor to food. Potassium chloride (KCl) is an example of a salt substitute. Salt substitutes may also be modified, and are referred to as "modified salt substitute" herein.

As used herein, "reduced sodium" means that a percentage of sodium has been reduced than in the original composition or mixture.

Bulk density is a property of powders, granules, and other divided solids, especially used in reference to mineral components (soil, gravel), chemical substances, (pharmaceutical) ingredients, foodstuff, or any other masses of corpuscular or particulate matter. As used herein, bulk density is defined as the mass of many particles of the material divided by the total volume they occupy. The total volume includes particle volume, inter-particle void volume, and internal pore volume. Bulk density is the weight of a volume unit of powder and is usually expressed in g/cm³, kg/m³, or g/100 ml.

As used herein, a "coarse" particle is identified on the basis of particle size, wherein individual particles are visible by naked eye. In general, very coarse particles generally have a particle size greater than 1000 microns, coarse particles generally have a particle size range of about 355 to 1000 microns, and moderately coarse particles generally have a particle size range of about 180-355 microns.

As used herein, a "fine" particle has a particle size that is smaller than a coarse particle, and individual particles require assistance through magnification to be visible. In general, fine particles have a particle size range of about 125-180 microns, and very fine particles have a particle size range of about 90-125 microns.

As used herein "admixing," refers to the process where the modified salt, salt substitute, or modified salt substitute formulation is mixed with or added to the completed composition or mixed with some or all of the components of the composition during formation or some combination of these steps. When used in the context of admixing, the term "composition" refers to the composition or any of its components. This admixing step can include a process selected from the step of adding the modified salt, salt substitute, or modified salt substitute mixture through spraying, coating, pasting or painting on the composition, or by encapsulating or mixing with the composition and any combination thereof.

Usage of a modified salt, salt substitute, or modified salt substitute individually, or in combination having at least two or more different particle size ranges is referred to as the "reduced salt mixture". The reduced salt mixture is a dry powder.

A "sieve" is a device for characterizing the particle size distribution of a sample, typically using a woven screen such as a mesh. Sieve analysis (or gradation test) is a practice or procedure used (to assess the particle size distribution (also called gradation) of a granular material. Sieve sizes used in combinations of four to eight sieves. The term "on pan" refers the last pan or the bottom pan wherein the particles are no longer sieved.

A salted confectionary composition is a confectionary composition that comprises or delivers salt to a consumer.

As used herein, the term "chewing gum" refers to a flavored substance intended for chewing. The term as used herein also includes bubble gum and confectionery products containing chewing gum. In certain embodiments, chewing gum forms include, but are not limited to, tablets, sticks, solid balls, hollow balls, center filled, and pellets or pillows.

All percentages used herein are by weight of the total composition and all measurements made are at 25°C, unless otherwise designated.

### 2. Salt Compounds

The present invention relates to reduced salt confectionary formulations that include a reduced salt mixture comprising at least two or more different particle sizes of a salt substitute.

The main characteristics of the salt substitutes and modified salts discussed herein are the particle size and particle shape (morphology). Size parameters (for example, average diameter, area, or perimeter) describe a geometrical object independently of its shape. The morphology of the salt particle is characterized by description (spherical, angular, dendritic, dish-shaped, acircular). The shape parameter characterizes mainly the shape, without considering the size. In general, the particle size can be determined by different methods such as sieve analysis, image analysis, and laser analysis.

The size of the particles are often expressed as a number which corresponds to the mesh screen size of a sieve. The screen size indicates the number of openings in the mesh screen per inch. For example, a # 40 sieve has 40 openings per inch in the screen mesh. Particles that can sift through that mesh are said to be "40 mesh" size.

Below is a list of mesh sizes and the size of the mesh opening in millimeters (1/1000 of a meter) or microns (1/1,000,000) of a meter. Of course, there is a correlation between the size of the mesh opening and the particle size of the sifted powder. As the opening becomes smaller, so will be resulting particle size. Most of the particles of a sifted powder will have approximately the size as the mesh opening.

**Table 1**

| | **Mesh Opening Size** | |
|---|---|---|
| **Mesh Size Number** | **millimeters** | **microns** |
| 2 | 9.52 | 9520 |
| 4 | 4.76 | 4760 |
| 8 | 2.38 | 2380 |
| 10 | 2.00 | 2000 |
| 20 | 0.84 | 840 |
| 30 | 0.59 | 590 |
| 40 | 0.42 | 420 |
| 50 | 0.297 | 297 |
| 60 | 0.250 | 250 |
| 70 | 0.210 | 210 |
| 80 | 0.177 | 177 |
| 100 | 0.149 | 149 |
| 120 | 0.125 | 125 |
| 200 | 0.074 | 74 |

The USP 24/NF19 uses descriptive terms to define powder fineness. The table below shows the correlation their classification.

**Table 2**

| **Description Term** | **Particle Size Range Mesh Opening Size (microns)** | **Mesh Size Number** |
|---|---|---|
| Very Coarse | > 1000 | 2-10 |
| Coarse | 355 -1000 | 20 -40 |
| Moderately Coarse | 180 - 355 | 40 - 80 |
| Fine | 125 - 180 | 80 - 120 |
| Very Fine | 90 - 125 | 120- 200 |

Salt substitutes which consist of other mineral salts, can impart a salty flavor to food; however, the profile is different to sodium chloride. Potassium chloride (KCl) is most frequently used, although other mineral salts including but not limiting to ammonium chloride, calcium chloride, magnesium chloride and potassium lactate may also be used to reduce sodium levels in food products, but these deliver unwanted flavors which limit their use. In general, the flavor profile of these salt substitutes is different to sodium chloride (NaCl). Potassium chloride at certain levels can contribute a noticeable metallic flavor, which most consumers find unpleasant. Usually, potassium chloride is blended with sodium chloride or to mask unpleasant, bitter taste.

Applicants have surprisingly found that by using different particle size ranges of salt substitutes, negative organoleptic associated with such salt substitutes can be significantly reduced or removed, while still providing a comparable appearance and taste to salt (sodium chloride).

The present invention is defined by the claims and discloses a reduced salt mixture comprising at least two or more different particle sizes of a salt substitute wherein the at least two or more different particle sizes comprise fine and coarse particles,
wherein fine particles have a particle size range of about 125 to 180 microns in accordance with USP 24/NF19
wherein coarse particles have a particle size range of about 355 to 1000 microns in accordance with USP 24/ NF19,
wherein the salt substitute is selected from the group consisting of potassium chloride, ammonium chloride, calcium chloride, magnesium chloride, potassium lactate, and combinations thereof, and
wherein the ratio of fine to coarse particles is from 1.5:1 to 1:1.5.

In an embodiment, not part of the invention, the salt substitute may be used in the reduced salt mixture wherein one salt substitute, has a particle size range of at least about 90 to about 180 microns, and another salt substitute has a particle size range of at least about 180 to about 1200 microns. In yet another embodiment, not part of the invention, the salt substitute may be used in the reduced salt mixture wherein the salt has a particle size range of at least about 75 to 250 microns, and the same salt substitute has a particle size range of at least about 250 to about 1200 microns.

In another embodiment, not part of the invention, the one salt substitute has a particle size range of at least
about 90 to about 180 microns wherein 20% to 50% of the particles are retained on a #100 mesh screen, and another salt substitute has a particle size range of at least about 180 to about 1200 microns wherein 15% to 40% of the particles are retained on a #40 mesh screen, or 20% to 50% of the particles are retained on a #30 mesh screen.

In a preferred embodiment, not part of the nvention, less than 30% of the fine and very fine particles of the salt
substitute are retained on pan, and less than 25% of the very coarse, coarse, and moderately coarse salt substitute particles are retained on pan using sieve analysis. In another preferred embodiment, the reduced salt mixture provides at least 85% reduction of salt by weight of a salted confectionary composition.

In another aspect of the invention, the salt substitute is selected from the group including but not limiting to potassium chloride (KCl), ammonium chloride, calcium chloride, magnesium chloride, potassium lactate and combinations thereof. Preferably, the salt substitute is potassium chloride (KCl).

The salt substitute is used in the reduced salt mixture having a particle size selected from group consisting of very coarse, coarse, moderately coarse, fine and very fine particles. The different particle sizes of the salt substitute may be used in a preferred weight ratio of about 1:1. In other embodiments, not part of the invention, the weight ratio of fine and very particles to moderately coarse, coarse and very coarse particle sizes is in a range of about 1:1.25 to 1.125:1, or from about 1.5:1 to about 1:1.5. In other embodiments, the ratio of fine to coarse particles is from about 1.5:1 to 1:1.5.

The salt substitute of the present invention comprises at least two different particle sizes, fine and coarse, which are mixed together prior to admixing with a confectionary composition. The fine particles of KCl and the coarse particles of KCl are present in a 1:1 ratio as a direct replace to sodium chloride (NaCl) in a salted confectionary composition.

In a preferred embodiment, the reduced salt mixture provides at least 85% reduction of salt by weight of a salted confectionary composition.

The salt substitute employed may be the same, or different, as long as the particle size range differs from fine to coarse. In certain embodiments, two salt substitutes are combined, comprising potassium chloride and potassium lactate. In other embodiments, the two salt substitutes are potassium chloride and calcium chloride.

In another aspect, the salt substitute is combined with a modified salt. Modified salt is generally sodium chloride having a modified structure. Modified salts have the functionality and properties of regular salt, however, the physical structure is re-engineered. Salt substitutes such as potassium chloride (KCl), ammonium chloride, calcium chloride, magnesium chloride and potassium lactate may also be modified, and are called modified salt substitutes.

Regular salt is a solid cube-shaped particle. The modified salt or modified salt substitute is a shape other than a cube. In certain embodiments, the modified salt or salt substitute has a hollow center. In other embodiments, the modified salt or modified salt substitute is spherical in shape and has a hollow center. In other embodiments, the modified salt or modified salt substitute is spherical, angular, dendritic, dish-shaped, acircular, flat, squared, or flaked. Modified salts and modified salt substitutes are salt crystals with varying sizes and shapes.

A variety of different processes may be employed to modify salt or salt substitutes, including by not limiting to agglomeration through pressure, extrusion, rewetting, spray-bed drying, steam jet, heat/sintering, and binders. In general, such processes produce high-purity, food grade, modified salt and modified salt substitute particles. An example of a commercially available modified salt is SodaLo® (marketed and sold by Tate & Lyle).

In an embodiment, not part of the invention, a modified salt may be used in the reduced salt mixture wherein one modified salt, has a particle size range of at least about 90 to 180 microns, and another modified salt has a particle size range of at least about 180 to about 1200 microns. In yet another embodiment, not part of the invention, modified salt substitute may be used in the reduced salt mixture wherein one modified salt substitute, has a particle size range of at least about 75 to 250 microns, and another modified salt substitute has a particle size range of at least about 250 to about 1200 microns.

In another embodiment, a salt substitute, a modified salt, or a modified salt substitute is used alone or in combination in the reduced salt mixture, wherein one or more of the salt substitute, modified salt, or modified salt substitute has at least two different particle size ranges selected from group consisting of coarse, and fine particles. Preferably, the salt substitute, a modified salt, or a modified salt substitute is used alone or in combination in the reduced salt mixture, wherein one or more of the salt substitute, modified salt, or modified salt substitute has at least two different particle size ranges selected from the coarse and fine.

The different particle sizes of the salt substitute, modified salt, or modified salt substitute is used alone or in combination is used in a preferred weight ratio of very fine and fine particle sizes to moderately coarse, coarse, and very coarse particle sizes is about 1:1. In other embodiments, not part of the invention, the weight ratio of very fine and fine to moderately coarse, coarse and very coarse particle sizes is in a range of about 1:1.25 to 1.125:1, or from about 1.5:1 to about 1:1.5. According to the invention the ratio of all of the fine particles to all of the coarse particles is from about 1.5:1 to 1:1.5.

The salt substitute of the present invention comprises at least two different particle sizes, fine and coarse, which are mixed together prior to admixing with a confectionary composition. The fine particles of KCl and the coarse particles of KCl are present in a 1:1 ratio as a direct replacement to sodium chloride (NaCl) in a salted confectionary composition.

In other embodiments, the modified salt substitute comprises at least two different particle sizes, fine and coarse, which are mixed together prior to admixing with a confectionary composition. The fine particles and the coarse particles of the modified salt substitute are present in a 1:1 ratio as a direct replacement to sodium chloride (NaCl) in a salted confectionary composition.

In yet another embodiment, the modified salt comprises at least two different particle sizes, fine and coarse, which are mixed together prior to admixing with a confectionary composition. The fine particles and the coarse particles of the modified salt substitute are present in a 1:1.25 ratio as a direct replacement to sodium chloride (NaCl) in a salted confectionary composition.

Alternatively, the reduced salt mixture contains from about 20wt.% to 50wt.% of particles ranging from about 75 to 180 microns, or from about 90 to 180 microns of a salt substitute, modified salt, or modified salt substitute, and from about 20wt.% to 50wt.% of particles ranging from about 180 to 1000 microns, or from about 180 to 1200 microns of a salt substitute, modified salt, or modified salt substitute, to provide at least a 50% reduction of salt by weight of a salted confectionary composition. In other embodiments, the reduced salt mixture provides at least 85% reduction of salt by weight of a salted confectionary composition.

In other aspects, not part of the invention, the reduced salt mixture comprises from about 10wt.% to 30wt.% of about 75 to 180, or about 90 to 180 micron size particles selected from the group consisting of salt substitute, modified salt, modified salt substitute and combinations thereof, and from about 10wt.% to 30wt.% of about 180 to 1000 microns, or from about 180 to 1200 micron size particles selected from the group consisting of salt substitute, modified salt, modified salt substitute, and combinations thereof. In another aspect, the reduced salt mixture comprises from about 10wt.% to 30wt.% of about 75 to 180 microns , or about 90 to 180 micron size particles selected from the group consisting of salt substitute, modified salt, or modified salt substitute and combinations thereof, and from about 10wt.% to 30wt.% of about 180 to 1000 microns, or from about 180 to about 1200 micron size particles selected from the group consisting of salt substitute, modified salt, modified salt substitute, and combinations thereof.

In another embodiment, not part of the invention, the reduced salt mixture comprising fine and very fine particles comprising a salt substitute, modified salt, or modified salt substitute and combinations thereof, has a particle size range of at least about 90 to about 180 microns wherein 20% to 50% of the particles are retained on a #100 mesh screen, and the reduced salt mixture comprising fine and very fine particles comprising a salt substitute, modified salt, or modified salt substitute and combinations thereof, has a particle size range of at least about 180 to about 1200 microns wherein 15% to 40% of the particles are retained on a #40 mesh screen, or 20% to 50% of the particles are retained on a #30 mesh screen.

In a preferred embodiment, less than 30% of the fine and very fine particles of the reduced salt mixture comprising fine and very fine particles comprising a salt substitute, modified salt, or modified salt substitute and combinations thereof, are retained on pan, and less than 25% of the very coarse, coarse, and moderately coarse particles of the reduced salt mixture comprising fine and very fine particles comprising a salt substitute, modified salt, or modified salt substitute and combinations thereof are retained on pan using sieve analysis.

In some cases the salt substitutes, modified salt, or modified salt substitutes may require a particle size reduction to achieve a desired particle size, herein referred to as "grinding" or "pulverizing," is used to prepare ingredients for use in the present invention. This grinding or pulverizing is accomplished by those knowledgeable in the art of doing this and the act or process of pulverizing or grinding these ingredients is described herein as examples of a typical process and is in no way meant to limit the scope of the claims of this invention.

Typical pulverizing or grinding begins by first pulverizing of coarse particles followed by fine grinding. Shredders, pulverizers, grinders, etc. are typically used to do this. Preferably, the pulverizing process is done under cool environments, not excluding cryogenic pulverizing. These terms are familiar to those knowledgeable in this art.

In an embodiment, the salt substitute, modified salt, and modified salt substitute, are used individually or in combination to reduce the total sodium content by at least 50% by weight of the salted confectionary composition. In other embodiments, the modified salt and salt substitute may be used in combination to reduce the total sodium content by at least 85% by weight of the confectionary composition.

### 3. Reduced Salt Mixtures

The salt and various salt substitutes, modified salt, and modified salt substitutes are dry particles which are mixed prior to admixing with a confectionary composition.

Other ingredients may also be included to the reduced salt mixtures of the present invention.

Bulk sweeteners include both sugar and sugarless components. Bulk sweeteners include, but are not limited to: monosaccharides, disaccharides, polysaccharides, sugar alcohols, and combinations thereof; randomly bonded glucose polymers such as polydextrose (available under the trade name LITESSE manufactured by Danisco Sweeteners, Terre Haute, Indiana); isomalt (a racemic mixture of alpha-D-glucopyranosyl-1,6-mannitol and alpha-D-glucopyranosyl-1,6-sorbitol manufactured under the trade name PALATINIT by Suddeutsche Zucker); maltodextrins; hydrogenated starch hydrolysates; hydrogenated hexoses; and hydrogenated disaccharides. Examples of sugar sweeteners include, without limitation, sucrose, glucose (dextrose), maltose, dextrin, invert sugar, fructose (levulose), galactose, xylose, ribulose, corn syrup solids, partially hydrolyzed starch, and combinations thereof. Examples of sugarless sweeteners include, without limitation, sugar alcohols such as sorbitol, erythritol, mannitol, xylitol, galactitol, hydrogenated starch hydrolysates, maltitol, and combinations thereof. The bulk sweetener comprises from about 5 wt.% to about 95 wt.%, from about 10 wt.% to about 70 wt.%, or from about 30 wt.% to about 60 wt.% of the reduced salt mixture. In another aspect, the bulk sweetener comprises from about 15 wt.% to about 30 wt.% of the reduced salt mixture.

Colorants such as FD&C type lakes, plant extracts, fruit and vegetable extracts, titanium dioxide, cocoa powder or mixtures thereof, may be admixed to the reduced salt mixture in free-flowing ground, powder form.

In some aspects, the naturally derived food colorant is an extract from a living organism, such as a plant, animal, insect, and the like. For example, in some aspects, the naturally derived food colorant comprises an extract obtained from an animal, an insect, or a plant, and any combination thereof. Plant-sourced colors may be derived from roots, berries, bark, leaves, seeds, grain, fruit, stems, and wood. Microbial sources of naturally derived food colorants include algae, yeast, and bacteria. Extracts may provide a composition comprising a range of colorant compounds and other compounds. In some aspects, the naturally derived food colorant is selected from carotenoid, curcumin, black carrot, beet, gardenia blue, gardenia yellow, chlorophyllins, phycocyanins and combinations thereof.

The total amount of these coloring agents should not exceed about 5% by wt. of the reduced salt mixture. They may be as low as 0.001% by weight of the product. In any of the various aspects of the present disclosure, the concentration of the colorant of reduced salt mixture t may be about 0.1 percent by weight (wt.%), about 0.5 wt.%, about 1 wt.%, about 1.5 wt.%, about 2 wt.%, about 2.5 wt.% or about 3 wt.%, and ranges thereof, such as from about from 0.1 wt.% to about 3 wt.%.

In one embodiment the salt substitute or modified salt is at least partly color plated with coloring solutes, the salt substitutes or modified salt being within the spirit of the invention to either totally color plate a solution on, or alternatively, to coat a portion of the salt substitute or modified salt with a coloring solution and dry plate a coloring dye onto a remaining quantity of the salt substitute or modified salt powder.

In some aspects of the disclosure, the reduced salt mixture may comprise high intensity artificial sweeteners that optionally may be used as the sole sweetener or may be used in combination with the sweeteners disclosed above. Examples of high intensity artificial sweeteners include, without limitation, sucralose, aspartame, acesulfame K, neopentyl-NAPM derivatives such as neotame, salts of acesulfame, altitame, saccharin and its salts, cyclamic acid and its salts, glycyrrhizinate, dihydrochalcones, thaumatin, monellin, and combinations thereof. In order to provide longer lasting sweetness and flavor perception, it may be desirable to encapsulate or otherwise control the release of at least a portion of the artificial sweetener. Such techniques for achieving the desired release characteristics are known in the art and include wet granulation, wax granulation, spray drying, spray chilling, fluid bed coating, coacervation, and fiber extension.

Flavoring agents suitable for use with any of the various aspects of the present disclosure include natural and artificial flavors known in the art. Such flavorings may be chosen from, without limitation, synthetic flavor oils and flavoring aromatics and/or oils, oleoresins and extracts derived from plants, leaves, flowers, fruits, and combinations thereof. Cooling agents are considered flavoring agents. Reduced salt mixtures may suitably comprise from about 0.1 wt.% to about 15 wt.%, from about 0.02 wt.% to about 5 wt.%, from about 0.1 wt.% to about 3 wt.% or from about 1 wt.% to about 2 wt.% flavoring agent.

In some aspects of the invention, the flavoring agent may be employed in either liquid form and/or dried/solid form, such as a powder, crystalline, amorphous crystal, semi-crystalline and the like. Alternatively, in some embodiments they may be encapsulated or spray dried. The flavoring agent may be absorbed onto water soluble materials, such as cellulose, starch, sugar, maltodextrin, gum arabic and so forth or may be encapsulated. In some aspects, the flavoring agents may be used in many distinct physical forms well-known in the art to provide an initial burst of flavor and/or a prolonged sensation of flavor. Without being limited thereto, such physical forms include free forms, such as spray dried, powdered, beaded forms, encapsulated forms, and combinations thereof.

Non-limiting examples of suitable flavor oils include spearmint oil, cinnamon oil, oil of wintergreen (methyl salicylate), peppermint oil, clove oil, bay oil, anise oil, eucalyptus oil, thyme oil, cedar leaf oil, oil of nutmeg, allspice, oil of sage, mace, oil of bitter almonds, and cassia oil. Non-limiting examples of artificial, natural and synthetic fruit flavors include vanilla, citrus oils (e.g., lemon, orange, lime and grapefruit), and fruit essences (e.g., apple, pear, peach, grape, strawberry, raspberry, cherry, plum, pineapple, and apricot). The flavoring agents may be used in liquid or solid form and may be used individually or in admixture. Commonly used flavors include mints such as peppermint, menthol, spearmint, artificial vanilla, cinnamon derivatives, and various fruit flavors, whether employed individually or in admixture. Cooling agents.

Acidulants may suitably comprise one or more food grade acids. Examples of such acids include, but are not limited to, fumaric acid, malic acid, tartaric acid, citric acid, lactic acid, ascorbic acid, or mixtures of same. In some aspects, the acidulants are acid salts, e.g., sodium and/or potassium salts, such as sodium fumarate, sodium malate, sodium tartrate, sodium citrate, sodium lactate, and sodium ascorbate may also be incorporated in the reduced salt mixture.

In one embodiment, the one or more food grade acids are present in amounts ranging from about 0.01% to about 50% by weight of the reduced salt mixture. In another embodiment, the reduced salt mixture contains about 20 wt.% to about 40 wt.%, or from about 10 wt.% to 30 wt.% by weight of the reduced salt mixture.

Anticaking agents may be used in accordance with the present invention to prevent the formation of lumps (caking), and to provide, free-flowing, finely divided, solid materials. Examples of anti-caking agents include but are not limited to tricalcium phosphate, silica, calcium carbonate, magnesium carbonate and sodium aluminosilicate. The one or more anticaking agents are present in amounts of about 0.01% to about 10.0% by weight of the reduced salt mixture. In other embodiments, the anticaking agents are present in a range of 0.01% to about 5.0%, or from 0.10% to about 2.0% by weight of the reduced salt mixture.

The amount bulk sweetener, color, flavor, and acidulants employed herein may be a matter of preference. Thus, the amount of these ingredients may be varied in order to obtain the result desired in the final product and such variations are within the capabilities of those skilled in the art without the need for undue experimentation.

In another aspect, the salt substitute, modified salt, or modified salt substitute pre-mix may contain one or more flavors, spices, colors, acids or anticaking agents, which may be in a solid form, such as a powder, crystalline, amorphous crystal, semi-crystalline and the like. Alternatively, in some embodiments they may be in the form of liquids or they may be encapsulated or spray dried.

### EXAMPLES

The presently disclosed subject matter will be better understood by reference to the following Examples, which are provided as exemplary of the disclosed subject matter, and not by way of limitation.

Table 3 below provides reduced salt mixtures.

**Table 3**

| Sample | | Sodium Reduction (%) | Sodium Content (mg/serving) |
|---|---|---|---|
| Control | | n/a | 1,200 |
| Comparative 1 | Modified Salt (Fine) | 25% | |
| Comparative 2 | Salt Substitute (Fine) | 50% | 600 |
| Comparative 3 | Salt Substitute (Coarse) | 50% | 600 |
| Comparative 4 | Modified Salt (Coarse) | 20% | |
| Comparative 5 | Salt Substitute (50% Coarse, 50% Fine) | 85% | 180 |
| Comparative 6 | 20% Modified Salt (Fine) and 30% Salt Substitute (Coarse) | 85% to 90% | 180 (for 85% reduction) and 120 for 90% reduction) |

Table 4 provides reduced salt mixtures that include additional ingredients.

**Table 4**

| **Ingredient** | **Control** | **Example 1** | **Example 2** | **Example 3** | **Example 4** | **Example 5** | **Example 6** |
|---|---|---|---|---|---|---|---|
| Bulk Sweetener | 19.00% | 19.00% | 19.00% | 19.00% | 19.00% | 19.00% | 19.00% |
| Acid | 21.00% | 21.00% | 21.00% | 21.00% | 21.00% | 21.00% | 21.00% |
| Color | 2.00% | 2.00% | 2.00% | 2.00% | 2.00% | 2.00% | 2.00% |
| Spice | 12.00% | 12.00% | 12.00% | 12.00% | 12.00% | 12.00% | 12.00% |
| Flavor | 0.50% | 0.50% | 0.50% | 0.50% | 0.50% | 0.50% | 0.50% |
| Anti-caking agent | 5.50% | 5.50% | 5.50% | 5.50% | 5.50% | 5.50% | 5.50% |
| Comparative 1 | | 40.00% | | | | | |
| Comparative 2 | | | 40.00% | | | | |
| Comparative 3 | | | | 40.00% | | | |
| Comparative 4 | | | | | 40.00% | | |
| Comparative 5 | | | | | | 40.00% | |
| Comparative 6 | | | | | | | 40.00% |
| Control | 40.00% | | | | | | |
| | | | | | | | |
| TOTAL | | 100.00% | 100.00% | 100.00% | 100.00% | 100.00% | 100.00% |

**Table 5**

| **Ingredient** | **Example 7** | **Example 8** | **Example 9** | **Example 10** | **Example 11** | **Example 12** |
|---|---|---|---|---|---|---|
| Bulk Sweetener | 20.00% | 20.00% | 20.00% | 20.00% | 20.00% | 20.00% |
| Acid | 20.00% | 20.00% | 20.00% | 20.00% | 20.00% | 20.00% |
| Color | 2.00% | 2.00% | 2.00% | 2.00% | 2.00% | 2.00% |
| Spice | 12.00% | 12.00% | 12.00% | 12.00% | 12.00% | 12.00% |
| Flavor | 0.50% | 0.50% | 0.50% | 0.50% | 0.50% | 0.50% |
| Anti-caking agent | 5.50% | 5.50% | 5.50% | 5.50% | 5.50% | 5.50% |
| Comparative 1 Modified Salt (Fine) | 20.00% | | 20.00% | | 10.00% | |
| Comparative 2 Salt Substitute (Fine) | | 20.00% | | 20.00% | 10.00% | 10.00% |
| Comparative 3 Salt substitute (Coarse) | 20.00% | 20.00% | | | | 10.00% |
| Comparative 4 Modified Salt (Coarse) | | | 20.00% | 20.00% | 20.00% | 15.00% |

### 4. Sensory Results

Table 6 below reflects descriptive analysis (n=5) of the reduced salt mixtures captured above in Table 4.

A sensory study was conducted on the reduced salt mixtures compared to the control by five (n=5) trained panelists. The study was conducted using the reduced salt mixtures in Examples 1-6 against the control as captured in Table 4.

The reduced salt mixtures were evaluated for the following sensory attributes: spicy, salt, sour, and sweet on a scale of 1-10 (10 being the highest) and averaged amongst the panelists. Other descriptive comments were also noted and captured in Table 5 below.

**Table 5**

| Sample | Salt - Type | Particle Size | Descriptive ratings (1-10 scale) | | Bench Test Sensory Observations |
|---|---|---|---|---|---|
| Control | NaCl | Coarse | Salt Descriptor | 7 | |
| | | | Sour Descriptor | 5 | |
| | | | Pungency Descriptor | 4 | |
| | | | Sweet Descriptor | 2 | |
| Example 1 | Modified Salt - A | Fine | Salt Descriptor | 8 | Appearance similar to standard, the note is higher salt and acidity note, the level of pungency and sweetness is enhanced remain |
| | | | Sour Descriptor | 6 | |
| | | | Pungency Descriptor | 4 | |
| | | | Sweet Descriptor | 2 | |
| Example 2 | KCl | Fine | Salt Descriptor | 6 | Acidity note increases and the salt note is reduced slightly, pungency and sweetness remain, texture and appearance are very similar |
| | | | Sour Descriptor | 7 | |
| | | | Pungency Descriptor | 4 | |
| | | | Sweet Descriptor | 2 | |
| Example 3 | KCl | Coarse | Salt Descriptor | 8 | Salinity and acidity increases, the pungency and sweetness remain, texture and appearance changes the salt crystals are seen larger |
| | | | Sour Descriptor | 6 | |
| | | | Pungency Descriptor | 4 | |
| | | | Sweet Descriptor | 2 | |
| Example 4 | Modified Salt - A | Coarse | Salt Descriptor | 5 | The low level of salinity, acidity rises slightly, rising sweetness and pungency level remains, similar appearance to the Control |
| | | | Sour Descriptor | 6 | |
| | | | Pungency Descriptor | 4 | |
| | | | Sweet Descriptor | 3 | |
| Example 5 | KCl | 50% Coarse / 50% Fine | Salt Descriptor | 7 | Texture very similar to the Control and descriptor very similar to the control |
| | | | Sour Descriptor | 5 | |
| | | | Pungency Descriptor | 4 | |
| | | | Sweet Descriptor | 2 | |
| Example 6 | KCl + Modified Salt - A | 20% Modified Salt A (Fine) and 30% Salt Substitute (Coarse) | Salt Descriptor | 6 | Slightly lower salinity and acid note rises slightly, remain pungency and sweetness, texture and appearance changes |
| | | | Sour Descriptor | 6 | |
| | | | Pungency Descriptor | 4 | |
| | | | Sweet Descriptor | 2 | |

### 5. Application to Confections

The reduced salt mixture of the present invention may be applied to a variety of confectionary compositions including but not limiting to gelled confections (gummies, jellies, or gum drops), hard candies (boiled, glass, amorphous, or rock candy), chewy candy (toffee, taffees), chewing gums and chocolates.

The reduced salt mixture may be kept separately from a confectionary composition, and applied by the consumer. For example, the reduced salt mix may be provided as a dip and stick format by 1) licking a hard candy stick a few times, 2) dunking the hard candy into a container holding the reduced salt mixture 3) licking the reduced salt mixture sugar off the hard candy, 4) repeat as desired.

In efforts to make reduced or low-salt hard confections, the reduced salt mixture may be may be applied to the surface of a confectionary composition through spraying, pasting or painting, or by encapsulating or mixing with the confection and any combination thereof. The coating may be hard or soft, permanent or transitory.

In an embodiment, the salt reducing mixture is applied by casting a molten syrup or film onto a chewing gum composition and pasting the reduced salt mixture on the molten syrup or film.

The reduced salt premix may be admixed with a confection to the completed composition or mixed with some or all of the components of the confection.

## Claims

1. A reduced salt mixture comprising at least two or more different particle sizes of a salt substitute wherein the at least two or more different particle sizes comprise fine and coarse particles,
wherein fine particles have a particle size range of about 125 to 180 microns in accordance with USP 24/NF19
wherein coarse particles have a particle size range of about 355 to 1000 microns in accordance with USP 24/NF19,
wherein the salt substitute is selected from the group consisting of potassium
chloride, ammonium chloride, calcium chloride, magnesium chloride, potassium lactate,
and combinations thereof, and
wherein the ratio of fine to coarse particles is from 1.5:1 to 1:1.5.

2. A reduced salt mixture according to claim 1, wherein the salt substitute is potassium chloride.

3. A reduced salt mixture according to claim 2, wherein the fine particles of KCl and the coarse particles of KCl are present in a 1:1 ratio.

4. A confectionary composition comprising a reduced salt mixture comprising at least two or more different particle sizes of a salt substitute, wherein the at least two or more different particle sizes comprise fine and coarse particles,
wherein fine particles have a particle size range of about 125 to 180 microns in accordance with USP 24/NF19
wherein coarse particles have a particle size range of about 355 to 1000 microns in accordance with USP 24/NF19,
wherein the salt substitute is selected from the group consisting of potassium
chloride, ammonium chloride, calcium chloride, magnesium chloride, potassium lactate,
and combinations thereof, and
wherein the ratio of fine to coarse particles is from 1.5:1 to 1:1.5

5. The confectionary composition of claim 4, wherein the composition is selected from the group consisting of chewy, hard candies, gelled candies, toffees, chewing gums, syrups, films, and chocolates.

6. The confectionary composition of claim 4, wherein the reduced salt mixture comprises a bulk sweetener, color, flavor, acid and combinations thereof.

## Patentansprüche

1. Salzreduziertes Gemisch, umfassend wenigstens zwei oder mehr verschiedene Partikelgrößen eines Salzersatzes, wobei die wenigstens zwei oder mehr verschiedenen Partikelgrößen feine und grobe Partikel umfassen,
wobei feine Partikel einen Partikelgrößenbereich von etwa 125 bis 180 Mikrometer gemäß USP 24/NF19 aufweisen, wobei grobe Partikel einen Partikelgrößenbereich von etwa 355 bis 1000 Mikrometer gemäß USP 24/NF19 aufweisen, wobei der Salzersatz ausgewählt ist aus der Gruppe bestehend aus Kaliumchlorid, Ammoniumchlorid, Calciumchlorid, Magnesiumchlorid, Kaliumlactat und Kombinationen davon und
wobei das Verhältnis von feinen zu groben Partikeln von 1,5:1 bis 1:1,5 beträgt.

2. Salzreduziertes Gemisch gemäß Anspruch 1, wobei der Salzersatz Kaliumchlorid ist.

3. Salzreduziertes Gemisch gemäß Anspruch 2, wobei die feinen Partikel von KCl und die groben Partikel von KCl in einem Verhältnis von 1:1 vorliegen.

4. Süßwarenzusammensetzung, umfassend ein salzreduziertes Gemisch, das wenigstens zwei oder mehr verschiedene Partikelgrößen eines Salzersatzes umfasst, wobei die wenigstens zwei oder mehr verschiedenen Partikelgrößen feine und grobe Partikel umfassen,
wobei feine Partikel einen Partikelgrößenbereich von etwa 125 bis 180 Mikrometer gemäß USP 24/NF19 aufweisen, wobei grobe Partikel einen Partikelgrößenbereich von etwa 355 bis 1000 Mikrometer gemäß USP 24/NF19 aufweisen, wobei der Salzersatz ausgewählt ist aus der Gruppe bestehend aus Kaliumchlorid, Ammoniumchlorid, Calciumchlorid, Magnesiumchlorid, Kaliumlactat und Kombinationen davon und
wobei das Verhältnis von feinen zu groben Partikeln von 1,5:1 bis 1:1,5 beträgt.

5. Süßwarenzusammensetzung gemäß Anspruch 4, wobei die Zusammensetzung ausgewählt ist aus der Gruppe bestehend aus kaubaren harten Süßigkeiten, gelatinierten Süßigkeiten, Toffees, Kaugummis, Sirupen, Überzügen und Schokoladen.

6. Süßwarenzusammensetzung gemäß Anspruch 4, wobei das salzreduzierte Gemisch einen Füllsüßstoff, Farbstoff, Aroma, Säure und Kombinationen davon umfasst.

## Revendications

1. Mélange à teneur réduite en sel comprenant au moins deux, ou plus, grosseurs de particule différentes d'un substitut de sel, les au moins deux grosseurs de particule, ou plus, différentes comprenant des particules fines et grossières,
les particules fines possédant une plage de grosseur de particule d'environ 125 à 180 microns conformément à l'USP 24/NF19,
les particules grossières possédant une plage de grosseur de particule d'environ 355 à 1 000 microns conformément à l'USP 24/NF19,
le substitut de sel étant choisi dans le groupe constitué par le chlorure de potassium, le chlorure d'ammonium, le chlorure de calcium, le chlorure de magnésium, le lactate de potassium, et des combinaisons correspondantes, et
le rapport de particules fines sur grossières étant de 1,5:1 à 1:1,5.

2. Mélange à teneur réduite en sel selon la revendication 1, le substitut de sel étant le chlorure de potassium.

3. Mélange à teneur réduite en sel selon la revendication 2, les particules fines de KCl et les particules grossières de KCl étant présentes en un rapport de 1:1.

4. Composition de confiserie comprenant un mélange à teneur réduite en sel comprenant au moins deux, ou plus, grosseurs de particule différentes d'un substitut de sel, les au moins deux, ou plus, grosseurs de particule différentes comprenant des particules fines et grossières,
les particules fines possédant une plage de grosseur de particule d'environ 125 à 180 microns conformément à l'USP 24/NF19,
les particules grossières possédant une plage de grosseur de particule d'environ 355 à 1 000 microns conformément à l'USP 24/NF19,
le substitut de sel étant choisi dans le groupe constitué par le chlorure de potassium, le chlorure d'ammonium, le chlorure de calcium, le chlorure de magnésium, le lactate de potassium, et des combinaisons correspondantes, et
le rapport de particules fines sur grossières étant de 1,5:1 à 1:1,5.

5. Composition de confiserie selon la revendication 4, la composition étant choisie dans le groupe constitué par des sucreries moelleuses, dures, des sucreries gélifiées, des toffees, des chewing-gums, des sirops, des films et des chocolats.

6. Composition de confiserie selon la revendication 4, le mélange à teneur réduite en sel comprenant un édulcorant en vrac, un colorant, un arôme, un acide et des combinaisons correspondantes.
